# EUROPÄISCHE PATENTSCHRIFT

(11) **EP 1 458 586 B1**
(45) Veröffentlichungstag und Bekanntmachung des Hinweises auf die Patenterteilung: **21.06.2006**
(21) Anmeldenummer: 02794983.3
(22) Anmeldetag: 10.12.2002
(51) Int. Cl.: B60K 31/04, B60K 6/04

(54) **VORRICHTUNG UND VERFAHREN ZUR REGELUNG DER FAHRGESCHWINDIGKEIT EINES FAHRZEUGS**
DEVICE AND METHOD FOR ADJUSTING THE SPEED OF A VEHICLE
DISPOSITIF ET PROCEDE POUR REGULER LA VITESSE DE ROULAGE D'UN VEHICULE

(30) Priorität: 18.12.2001 DE 10162017
(43) Veröffentlichungstag der Anmeldung: 22.09.2004
(73) Patentinhaber: ROBERT BOSCH GMBH, 70442 Stuttgart (DE)
(72) Erfinder: KALLENBACH, Rainer, 71336 Waiblingen (DE); BICKENDORF, Frank, 71254 Ditzingen (DE); FOELSCHE, Volkmar, 74080 Heilbronn (DE); HUELSER, Holger, A-8010 Graz (AT)
(74) Vertreter: Gleiss & Grosse
(86) Internationale Anmeldenummer: PCT/DE2002/004516
(87) Internationale Veröffentlichungsnummer: WO 2003/051663

(56) Entgegenhaltungen:
- EP-A- 0 983 894
- DE-A- 19 937 381
- DE-C- 19 914 428
- FR-A- 2 742 100
- US-A- 5 823 280
- US-A- 6 059 064
- US-A- 6 122 588
- US-B1- 6 209 672

## Beschreibung

Die Erfindung betrifft ein Verfahren zur Regelung der Fahrgeschwindigkeit eines Fahrzeugs gemäß dem Oberbegriff des Anspruchs 1.

### Stand der Technik

Verfahren zur Regelung der Fahrgeschwindigkeit eines Fahrzeugs sind bekannt. Sie werden auch als ACC-Systeme (Adaptive Cruise Control), Fahrgeschwindigkeitsregler oder Tempomat bezeichnet.

Es sind Kraftfahrzeuge bekannt, die im Antriebsstrang neben einer Brennkraftmaschine auch noch eine elektrische Maschine aufweisen. Solche elektrische Maschinen im Antriebstrang eines Kraftfahrzeugs werden auch als Starter-Generator, Kurbelwellen-Starter-Generator oder integrierter Starter-Generator bezeichnet.

Aus der DE 199 14 428 Cl ist eine Antriebsanordnung für ein Kraftfahrzeug bekannt, bei der das Bremsmoment einer elektrischen Maschine im Antriebstrang in Verbindung mit einem automatischen Geschwindigkeits- und Abstandsregelsystem eingesetzt wird. Dabei wird die mit dem Verbrennungsmotor gekoppelte elektrische Maschine im Fahrbetrieb des Kraftfahrzeug stets generatorisch als Lichtmaschine betrieben, um den Verbrennungsmotor zu bremsen und somit den Antriebsstrang mit einem Lastmoment zu beaufschlagen.

Ein Verfahren gemäß dem Oberbegriff des Anspruchs 1 ist in der US-B1-6 209 672 für ein Hybridfahrzeug mit zwei Elektromotoren beschrieben.

Weiter offenbart die US-A-6 122 588 ein System und ein Verfahren zur Verringerung einer Geschwindigkeit eines Fahrzeugs, um eine Sollgeschwindigkeit aufrecht zu erhalten, wobei die Sollgeschwindigkeit mit der Istgeschwindigkeit verglichen wird, um eine Geschwindigkeitsabweichung zu bestimmen, und wobei in Abhängigkeit von der Geschwindigkeitsabweichung durch regeneratives Bremsen ein kontinuierlich veränderliches Bremsmoment erzeugt wird, wenn die Istgeschwindigkeit die Sollgeschwindigkeit übersteigt.

### Vorteile der Erfindung

Das erfindungsgemäße Verfahren zeichnet sich dadurch aus, dass bei einer Istgeschwindigkeit größer als die Sollgeschwindigkeit eine Verzögerung des Fahrzeugs gefordert und hierzu die elektrische Maschine als Generator betrieben wird und dass bei einer Istgeschwindigkeit kleiner als die Sollgeschwindigkeit die elektrische Maschine als Motor betrieben wird, dass kurzzeitige und/oder relativ kleine Schwankungen im erforderlichen Antriebsmoment, um das Fahrzeug auf einer konstanten Geschwindigkeit zu halten, ausschließlich durch die elektrische Maschine ausgeglichen werden, und dass nach einer bestimmten Zeitdauer, in der Schwankungen des Antriebsmoments ausschließlich durch die elektrische Maschine ausgeglichen wurden, das Drehmoment der Brennkraftmaschine, vorzugsweise mittels eines Integrators, auf- beziehungsweise abgeregelt und der Anteil der elektrischen Maschine am Gesamtantriebsmoment gegen Null zurückgeführt wird.

Das von einem Fahrgeschwindigkeitsregler in Abhängigkeit der Ist- und der Sollgeschwindigkeit des Fahrzeugs geforderte Drehmoment, das auf mindestens ein Rad des Fahrzeugs übertragen wird, kann je nach Ausgestaltung der Antriebsanordnung des Fahrzeugs wahlweise von der elektrischen Maschine oder der Brennkraftmaschine oder von der elektrischen Maschine und der Brennkraftmaschine aufgebracht werden. In der Steuereinheit des Fahrgeschwindigkeitsreglers können hierzu Strategien abgelegt sein, um das geforderte Drehmoment optimal auf die elektrische Maschine und die Brennkraftmaschine zu verteilen. Ist die Summe der auf das mindestens eine Rad übertragenen Drehmomente größer als die auf das Fahrzeug wirkenden Fahrwiderstände, führt das zu einer Beschleunigung des Fahrzeugs, während wenn die Summe dieser Drehmomente kleiner als die Fahrwiderstände sind, dies zu einer Verzögerung (Bremsung) des Fahrzeugs führt.

Dies bietet den Vorteil, dass die mindestens eine im Fahrzeug vorgesehene elektrische Maschine in Verbindung mit der Vorrichtung (Fahrgeschwindigkeitsregler) zur Regelung der Fahrgeschwindigkeit des Fahrzeugs vielfältig einsetzbar ist, also nicht nur zum Abbremsen, sondern auch zum Beschleunigen des Fahrzeugs.

Zur Reduzierung der Fahrgeschwindigkeit des Fahrzeugs kann weiter vorgesehen sein, dass auch eine mindestens einem Rad des Fahrzeugs zugeordnete Bremseinrichtung betätigt wird. Dadurch kann die Fahrgeschwindigkeit noch stärker reduziert werden, als dies allein durch die Brennkraftmaschine und die elektrische Maschine möglich ist.

Eine zur Durchführung des erfindungsgemäßen Verfahrens geeignete Vorrichtung kann eine Steuereinheit zur Steuerung des Drehmoments der elektrische Maschine und Mittel zur Ansteuerung der elektrischen Maschine umfassen, über die ein gewünschtes Drehmoment (Antriebs- oder Bremsmoment) vorgegeben werden kann. Darüber hinaus sind Mittel zur Erfassung der Istgeschwindigkeit des Fahrzeugs sowie Mittel zur Vorgabe der Sollgeschwindigkeit des Fahrzeugs vorgesehen. Die Erfassung der Istgeschwindigkeit kann auf unterschiedlichste Weise erfolgen, zum Beispiel mittels eines die Drehzahl eines Rades erfassenden Sensors. Zur Vorgabe der Sollgeschwindigkeit sind ebenfalls mehrere Möglichkeiten denkbar, beispielsweise kann ein Fahrzeuginsasse, insbesondere der Fahrer, über ein Bedienelement eine gewünschte Geschwindigkeit vorgeben. Die Mittel zur Vorgabe der Sollgeschwindigkeit können auch eine Einrichtung zur Einstellung des Abstands des Fahrzeugs zu einem Objekt, insbesondere einem vorausfahrenden Fahrzeug, umfassen (Geschwindigkeits- und Abstandsregelsystem, beispielsweise ACC-System). Eine dritte Ausführungsvariante sieht vor, dass der Steuereinheit über eine Datenverbindung, beispielsweise Satellitenverbindung, eine Sollgeschwindigkeit vorgegeben wird.

Vorteilhafte Ausführungsvarianten des Verfahrens ergeben sich aus Kombinationen der aus den Unteransprüchen hervorgehenden Merkmale.

### Zeichnungen

Die Erfindung wird nachfolgend anhand der zugehörigen Zeichnungen noch näher erläutert. Es zeigen:
- Figuren 1 bis 3: jeweils ein Prinzipschaltbild einer Antriebsanordnung für ein Fahrzeug; und
- Figur 4: zwei Graphen, bei denen der Gesamtbedarf des Antriebsmoments bei einer konstanten Fahrgeschwindigkeit (Graph I) in Abhängigkeit von dem Höhenprofil der Fahrstrecke (Graph II) dargestellt ist.

### Beschreibung der Ausführungsbeispiele

Im Folgenden werden anhand der Figuren mehrere Ausführungsbeispiele einer Vorrichtung 1 zur automatischen Regelung der Fahrgeschwindigkeit eines Fahrzeugs, beispielsweise Personenkraftwagen (Pkw), Lastkraftwagen (Lkw), Omnibus oder dergleichen, näher erläutert.

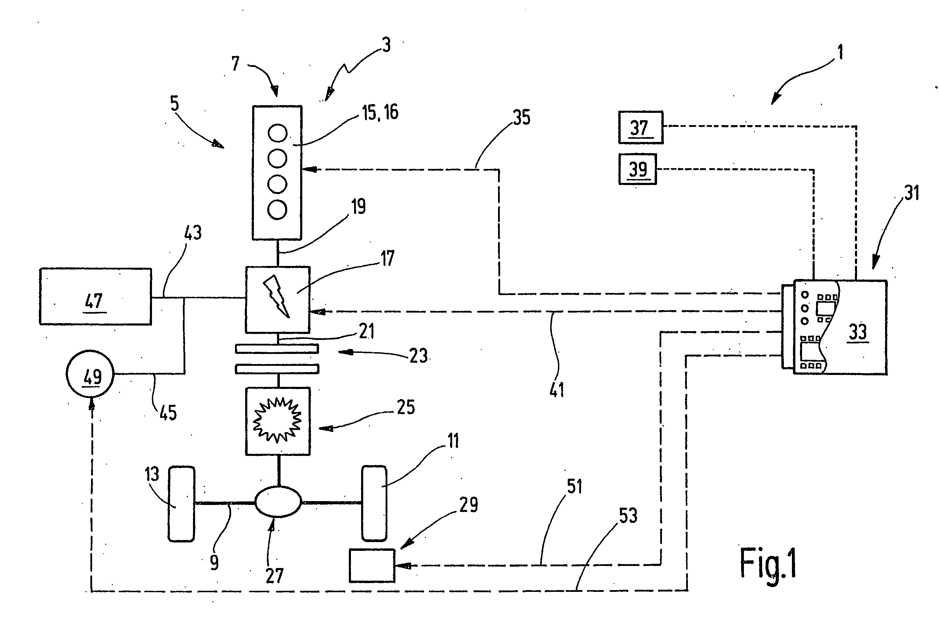

Figur 1 zeigt ein Prinzipschaltbild eines ersten Ausführungsbeispiels der Vorrichtung 1 für ein nicht näher dargestelltes Fahrzeug 3, das eine Antriebsanordnung 5 mit einem Antriebsstrang 7 aufweist. Der Antriebsstrang 7 dient zum Antreiben von auf einer Achse 9 angeordneten Rädern 11 und 13.

Die Antriebsanordnung 5 weist eine Brennkraftmaschine 15, die hier von einem Verbrennungsmotor 16 gebildet ist, und eine elektrische Maschine 17 auf, deren nicht dargestellter Rotor sowohl mit der Kurbelwelle 19 des Verbrennungsmotors 16 als auch mit einem Eingangsteil 21 einer Kupplung 23, beispielsweise Reibungskupplung, drehfest gekoppelt ist. Die beispielsweise elektrisch oder mechanisch betätigbare Kupplung 23 ermöglicht in einer ersten Schaltstellung, dass sich die Kurbelwelle 19 des Verbrennungsmotors 16 und der Rotor der elektrische Maschine 17 drehen können, ohne dass die Räder 11, 13 von dieser mit einem Drehmoment (Antriebs- oder Bremsmoment) beaufschlagt werden.

Alternativ zur Kupplung 23 kann auch ein Drehmomentwandler eingesetzt werden.

Im Antriebsstrang 7 sind ferner ein Getriebe 25, beispielsweise Schalt- oder Automatikgetriebe, und ein Differenzialgetriebe 27 vorgesehen. Es bleibt festzuhalten, dass die Kupplung 23, das Getriebe 25 und das Differenzialgetriebe 27 optionale Einrichtungen sind, die zur Durchführung des erfindungsgemäßen Verfahrens nicht erforderlich sind.

Bei geschlossener Kupplung 23 stehen sowohl der Verbrennungsmotor 16 als auch die elektrische Maschine 17 über den Rotor derselben, der Kupplung 23, dem Getriebe 25 und dem Differenzialgetriebe 27 in drehmomentübertragbarer Verbindung mit den Rädern 11, 13, so dass auf diese ein Antriebs-oder Bremsmoment übertragbar ist. Bei dieser Ausführungsform der Antriebsanordnung 5 werden Verbrennungsmotor 16 und elektrische Maschine 17 vorzugsweise immer gemeinsam eingesetzt, um das Fahrzeug 3 zu beschleunigen beziehungsweise zu verzögern. Es ist ohne weiteres möglich, dass nur mittels der elektrischen Maschine 17 ein vorgebbares Drehmoment auf die Räder 11, 13 aufgebracht wird, beispielsweise dann, wenn der Verbrennungsmotor 16 ausfällt oder das (Hybrid-)Fahrzeug 3 nur mittels elektrischer Energie angetrieben werden soll. Selbstverständlich ist es auch möglich, nur den Verbrennungsmotor 16 zum Beaufschlagen der Räder 11, 13 mit einem Drehmoment einzusetzen, während sich die elektrische Maschine 17 dabei in einem inaktivem Zustand befindet.

Das Fahrzeug 3 weist ferner eine Bremse 29 auf, um die Räder 11, 13 abzubremsen. Die Bremse 29 kann lediglich einem der Räder des Fahrzeugs 3 zugeordnet sein, .wie in Figur 1 angedeutet, oder mehreren Rädern. Aufbau und Funktion einer derartigen Bremse 29 ist bekannt, so dass hier nicht näher darauf eingegangen wird.

Die Vorrichtung 1 umfasst eine Steuereinheit 31 mit wenigstens einem elektronischen Steuergerät 33, mittels dessen das Drehmoment des Verbrennungsmotors 16 steuerbar ist, wie mit einem gestrichelt dargestellten Steuerpfeil 35 angedeutet. Durch Variation des Drehmoments des Verbrennungsmotors 16 kann die Geschwindigkeit des Fahrzeugs 3 verändert werden. Das elektronische Steuergerät 33 umfasst Mittel 37 zur Erfassung der aktuellen/momentanen Geschwindigkeit des Fahrzeugs 3 und Mittel 39 zur Vorgabe einer Sollgeschwindigkeit des Fahrzeugs 3. Die Mittel 37, 39 sind an sich bekannt, so dass diese nicht näher beschrieben werden.

Die Steuereinheit 31 kann anstelle des einzelnen elektronischen Steuergeräts 33 auch mehrere Steuergeräte aufweisen, die in Datenverbindung miteinander stehen.

Die elektrische Maschine 17 ist im Betrieb des Fahrzeugs 3 wahlweise als Generator und als Motor einsetzbar. Im generatorischen Betrieb kann die elektrische Maschine 17 ein Drehmoment zur Verzögerung (Abbremsung) des Fahrzeugs 3 und im motorischen Betrieb ein Drehmoment zur Beschleunigung (Antrieb) des Fahrzeugs 3 aufbringen. Die elektrische Maschine 17 umfasst ferner an sich bekannte Mittel zur Ansteuerung, über die ein gewünschtes Drehmoment vorgegeben werden kann. Dies erfolgt vorzugsweise über das elektronische Steuergerät 33, was mit einem gestrichelt dargestellten Steuerpfeil 41 angedeutet ist.

Die elektrische Maschine 17 ist über elektrische Leitungen 43 und 45 mit einem Stromspeicher 47, beispielsweise einer Batterie, und wenigstens einem Verbraucher 49, beispielsweise einer Heizungs- oder Klimaanlage verbunden. Im motorischen Betrieb der elektrische Maschine 17 liefert der Stromspeicher 47 Strom zum Antrieb des Fahrzeugs 3, im generatorischen Betrieb derselben nehmen Stromspeicher 47 und Verbraucher 49 den erzeugten Strom auf.

Zur Funktion der Vorrichtung 1: Zur Einstellung der über das Mittel 39 vorgegebenen Geschwindigkeit fordert das elektronische Steuergerät 33 ein Drehmoment vom Verbrennungsmotor 16 und/oder der elektrischen Maschine 17. Im elektronischen Steuergerät 33 sind hierzu vorzugsweise Strategien abgelegt, das Drehmoment optimal auf die beiden Motoren 16, 17 zu verteilen. Ist die Summe der vom Verbrennungsmotor 16 und von der elektrische Maschine 17 auf die Räder 11, 13 aufgebrachten Drehmomente größer als die auf das Fahrzeug 3 wirkenden Fahrwiderstände, führt das zu einer Beschleunigung des Fahrzeugs 3. Im anderen Fall, also wenn die Summe der vom Verbrennungsmotor 16 und der elektrische Maschine 17 auf die Räder 11, 13 übertragenen Drehmomente kleiner als die Fahrwiderstände ist, führt dies zu einer Verzögerung des Fahrzeugs 3. Wenn das elektronische Steuergerät 33 die Geschwindigkeit des Fahrzeugs 3 reduzieren will, weil die über die Mittel 37 erfasste aktuelle Geschwindigkeit des Fahrzeugs 3 größer ist als die über die Mittel 39 vorgegebene Sollgeschwindigkeit, kann weiterhin vorgesehen sein, auch die Bremse 29 durch das elektronische Steuergerät 33 zu betätigen, wie mit einem gestrichelt dargestellten Steuerpfeil 51 angedeutet, und so die Geschwindigkeit noch stärker zu reduzieren, als dies allein durch den Verbrennungsmotor 16 und die elektrische Maschine 17 möglich ist.

Besonders vorteilhaft ist es, wenn in dem Fall, dass das Fahrzeug 3 verzögert werden soll, das elektronische Steuergerät 33 auch die elektrische Leistungsaufnahme bei mindestens einem der elektrischen Verbraucher 49 erhöht, falls der Stromspeicher 47 nicht den gesamten, von der elektrischen Maschine 17 erzeugten elektrischen Strom aufnehmen kann und die Verzögerung des Fahrzeugs 3 durch das Bremsmoment der elektrischen Maschine 17 nicht ausreichend ist. Die Ansteuerung des elektrischen Verbrauchers 49 mittels des elektronischen Steuergeräts 33 ist mit einem gestrichelt dargestellten Steuerpfeil 53 angedeutet.

Im Folgenden wird eine besonders vorteilhafte Ausführungsvariante zur Regelung der Fahrgeschwindigkeit beschrieben, die bei einem Fahrzeug mit einer Antriebsanordnung, die wenigstens eine elektrische Maschine und mindestens eine Brennkraftmaschine aufweist, also wie sie zum Beispiel anhand der Figur 1 beschrieben wurde, einsetzbar ist.

Bei Aktivierung des vorstehend beschriebenen Fahrgeschwindigkeitsregler versucht dieser, die Geschwindigkeit des Fahrzeugs konstant beziehungsweise im Wesentlichen konstant zu halten, was bei Fahrten in hügligem Gelände zu erheblichen Änderungen des benötigten Antriebsmoments führt. Erfindungsgemäß ist daher vorgesehen, die Regelung des Antriebsmoments weitgehend mit Hilfe der elektrischen Maschine und mit möglichst konstanter Einsatz der Brennkraftmaschine durchzuführen. Die Brennkraftmaschine stellt dabei ein Grundantriebsmoment bereit, das sich aus der fahrdynamischen Gleichung ergibt. Dieses Grundantriebsmoment wird an einem Arbeitspunkt der Brennkraftmaschine eingestellt, an dem der Kraftstoffverbrauch und/oder die Abgasemissionen möglichst klein sind. Kurzzeitige Schwankungen des erforderlichen Gesamtantriebsmoments werden ausschließlich mittels der elektrischen Maschine ausgeglichen. Die Verbindung mit einem CVT- oder Automatikgetriebe und einer koordinierten Antriebsstrangsteuerung bietet weiteres Optimierungspotential. Dadurch kann die Brennkraftmaschine bei möglichst niedrigen Drehzahlen und im Falle von Benzinmotoren möglichst ungedrosselt betrieben werden. Der Vorteil besteht darin, dass Brennkraftmaschinen (Verbrennungsmotoren) hier in der Regel verbrauchsgünstig und auch mit geringen Abgasemissionen betrieben werden können und auch das Drehmoment eines Elektromotors in der Regel bei niedrigen Drehzahlen am größten ist und damit auch der zu erzielende Effekt.

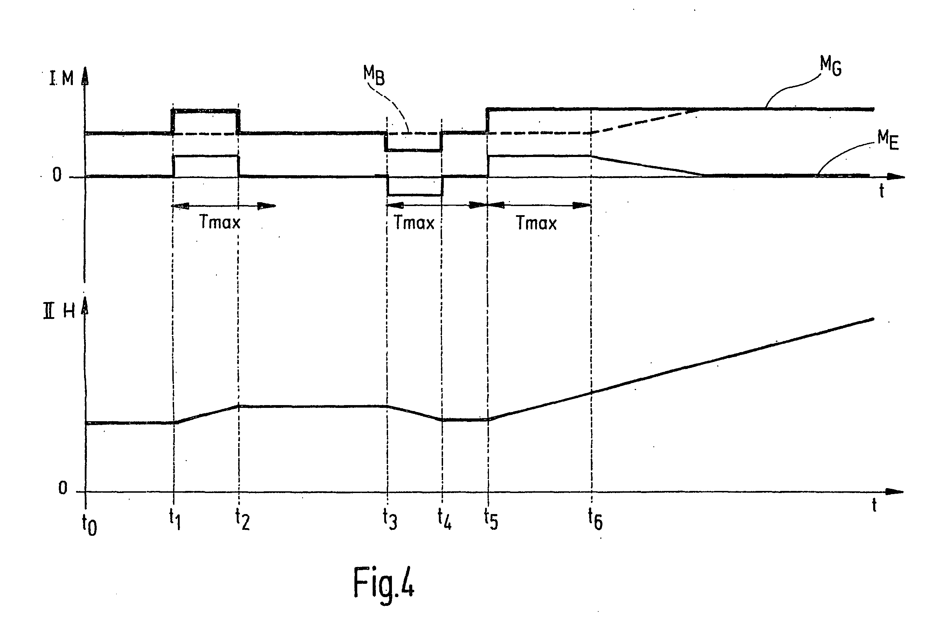

Das vorstehend beschriebene Verfahren wird im Folgenden anhand der Figur 4 näher erläutert. Der Graph I zeigt das von der elektrischen Maschine bereitgestellte Drehmoment M_{E}, das von der Brennkraftmaschine bereitgestellte Drehmoment M_{B} sowie das gewünschte/erforderliche, sich aus den Einzeldrehmomenten zusammensetzende Gesamtantriebsmoment M_{G} in Abhängigkeit von dem im Graph II dargestellten Höhenprofil der Fahrstrecke. Um die Fahrgeschwindigkeit konstant zu halten, wird eine zu hohe resultierende Geschwindigkeit durch rekuperatives Bremsen (Laden des Stromspeichers (Batterie)) ausgeglichen, während eine zu geringe Fahrgeschwindigkeit durch Abgabe eines positiven Drehmoments von der elektrischen Maschine kompensiert wird. Erst bei längeren Be- beziehungsweise Entladephasen des Stromspeichers (t > Tₘₐₓ) wird das Drehmoment der Brennkraftmaschine über einen Integrator auf- beziehungsweise abgeregelt und der Anteil der elektrischen Maschine am Gesamtantriebsmoment entsprechend in Richtung Null zurück geführt. Das heißt, in der Zeit von t₀ bis t₆ ist das Drehmoment der Brennkraftmaschine konstant und steigt erst nach dem Zeitpunkt t₆ an, da zu diesem Zeitpunkt die Entladephase der Batterie größer als Tₘₐₓ ist und das Drehmoment der elektrischen Maschine gegen Null zurück geführt wird. Sollte das zusätzliche Drehmoment der elektrischen Maschine nicht ausreichen, um die gewünschte Zielgeschwindigkeit (Sollgeschwindigkeit) des Fahrzeugs beizubehalten, wird entweder das Drehmoment der Brennkraftmaschine oder die Getriebeübersetzung angepasst.

Aus Figur 4 wird ohne weiteres deutlich, dass bei aktivem Fahrgeschwindigkeitsregler das Gesamtdrehmoment, um das Fahrzeug konstant auf einer gewünschten Geschwindigkeit zu halten, konsequent zwischen der elektrischen Maschine und der Brennkraftmaschine aufgeteilt wird. Bei ebenen Fahrstrecken und auf Fahrstrecken mit konstanter Steigung gelingt das Ausregeln der gewünschten Geschwindigkeit mit hoher Genauigkeit und geringer Aktivität des Fahrgeschwindigkeitsreglers. Erst durch das Aufteilen des Gesamtantriebsmoments und einen möglichst weitgehenden Verzicht auf Änderungen des Arbeitspunktes der Brennkraftmaschine kann auch bei langen Fahrstrecken mit konstanter Geschwindigkeit der Kraftstoffverbrauch gering gehalten werden.

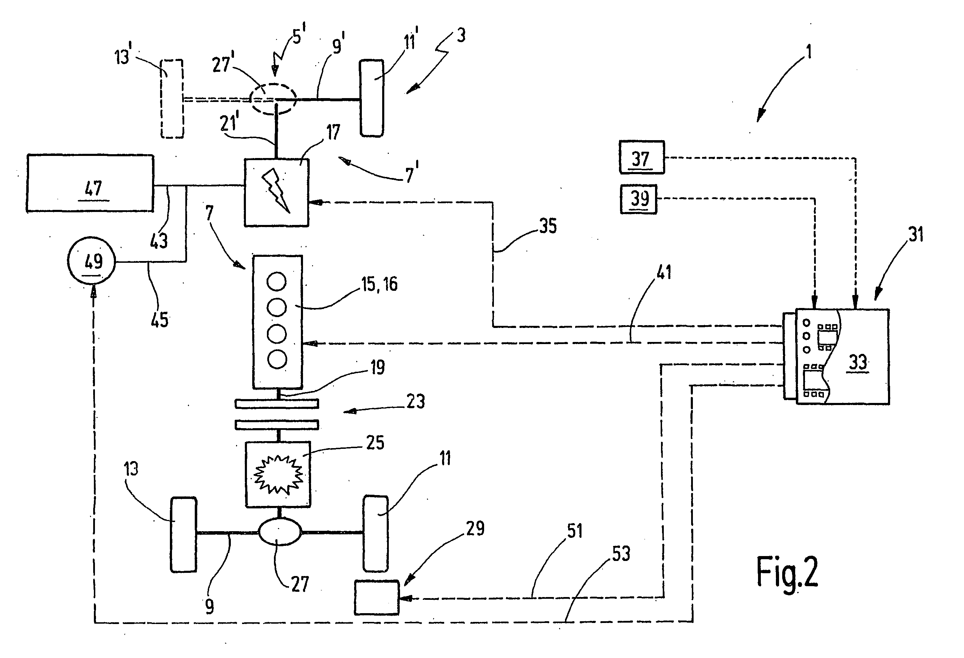

Figur 2 zeigt ein Prinzipschaltbild eines zweiten Ausführungsbeispiels der Vorrichtung 1. Gleiche Teile sind mit gleichen Bezugszeichen versehen, so dass insofern auf die Beschreibung zur Figur 1 verwiesen wird. Im Folgenden wird daher nur auf die Unterschiede näher eingegangen.

Das Fahrzeug 3 weist eine Antriebsanordnung 5' auf, die erste und zweite Antriebsstränge 7 und 7' aufweist, von denen der Antriebsstrang 7 den Rädern 11, 13 der Achse 9 (Vorder- oder Hinterachse) und der andere Antriebsstrang 7' einem Rad 11' einer zweiten Achse 9' (Hinter- oder Vorderachse) zugeordnet ist. Der erste Antriebsstrang 7 umfasst den Verbrennungsmotor 16, die Kupplung 23, das Getriebe 25 sowie das Differenzialgetriebe 27 und dient zum Antrieb der Räder 11, 13. Der zweite Antriebsstrang 7' umfasst die elektrische Maschine 17, die über ihr Antriebsteil 21 mit dem Rad 11' der anderen Achse 9' des Fahrzeugs 3 drehfest gekoppelt, um dieses mit einem Antriebs- oder Bremsmoment zu beaufschlagen.

In Figur 2 ist mit gestrichelten Linien angedeutet, dass bei einer weiteren Ausführungsvariante die elektrische Maschine 17 mittels eines Differenzialgetriebes 27' zusätzlich auch das mindestens eine andere Rad 13' an der Achse 9' antreiben kann. Bei einer dritten, nicht dargestellten Ausführungsvariante des zweiten Antriebsstrangs 7' sind mindestens zwei elektrische Maschinen vorgesehen, die jeweils mit einem der Räder 11', 13' in drehmomentübrtragender Verbindung stehen. Bei einer ebenfalls nicht dargestellten vierten Ausführungsvariante ist der der Achse 9 zugeordnete Antriebsstrang 7 identisch aufgebaut wie der anhand der Figur 1 beschriebene Antriebsstrang 7, während der mindestens eine weitere, der Achse 9' beziehungsweise lediglich dem Rad 11' zugeordnete Antriebsstrang 7' wie vorstehend beschrieben ausgebildet ist.

Das Verfahren zur Regelung der Fahrgeschwindigkeit des anhand der Figur 2 beschriebenen Ausführungsbeispiels entspricht im Wesentlichen dem anhand der Figur 1 beschriebenen Verfahren. Das heißt, das elektronische Steuergerät 33 kann von der elektrische Maschine 17 und dem Verbrennungsmotor 16 unabhängig voneinander ein von der Ist-und der Sollgeschwindigkeit des Fahrzeugs 3 abhängiges Drehmoment fordern. Es ist daher ohne weiteres möglich, dass das Rad 11' beziehungsweise die Räder 11' und 13' der zweiten Achse 9' sowie die Räder 11 und 13 der ersten Achse 9 mit unterschiedlichen beziehungsweise mit unterschiedlich großen Drehmomenten beaufschlagt werden, was in bestimmten Fahrsituationen vorteilhaft sein kann.

Das Ausführungsbeispiel gemäß Figur 2 unterscheidet sich von dem anhand der Figur 1 beschriebenen also insbesondere dadurch, dass der Verbrennungsmotor 16 und die elektrische Maschine 17 unabhängig voneinander ansteuerbar sind und jeweils eine andere Achse beziehungsweise mindestens ein Rad pro Fahrzeugachse unabhängig vom jeweils anderen Rad angetrieben werden kann. Festzuhalten bleibt, dass die in Figur 2 dargestellte Antriebsanordnung 5' einen Allradantrieb ermöglicht.

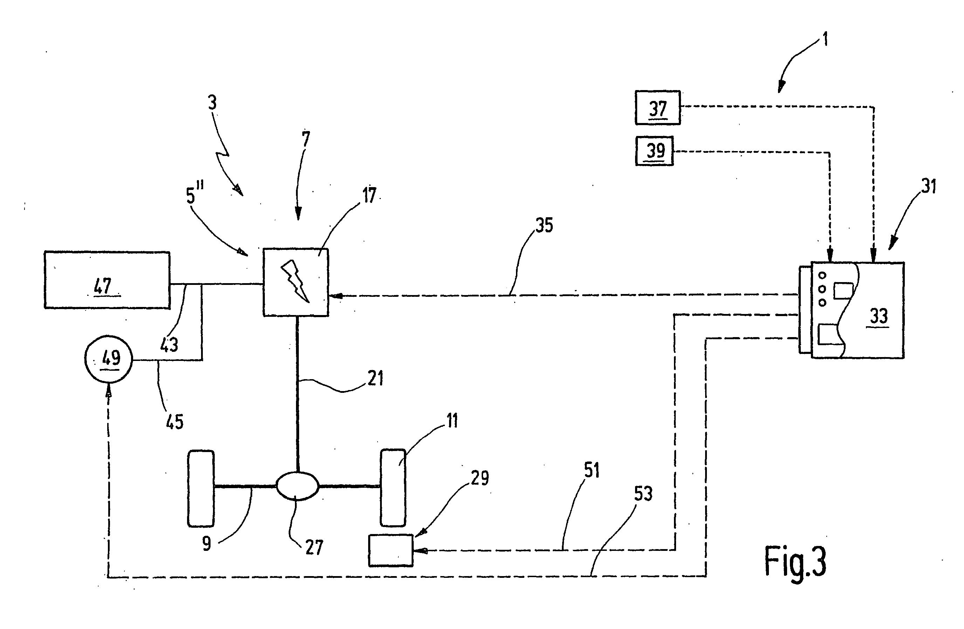

Figur. 3. zeigt ein Prinzipschaltbild eines dritten Ausführungsbeispiels der Vorrichtung 1. Teile, die bereits anhand der Figuren 1 und 2 beschrieben wurden, sind mit gleichen Bezugszeichen versehen. Es wird daher auf die Beschreibung der Figuren 1 und 2 verwiesen. Das Fahrzeug weist eine Antriebsanordnung 5" mit nur lediglich einem Antriebsstrang 7 mit mindestens einer elektrischen Maschine 17 auf, jedoch keine Brennkraftmaschine. Es handelt sich hier also um ein reines Elektrofahrzeug. Die elektrische Maschine 17 ist hier direkt über das Antriebsteil 21 und das Differenzialgetriebe 27 mit beiden Rädern 11, 13 der Achse 9 drehfest verbunden. Alternativ kann vorgesehen sein, auf das Differenzialgetriebe 27 zu verzichten und die elektrische Maschine 17 lediglich nur mit einem der Räder 11, 13 direkt zu verbinden. Bei einer weiteren Ausführungsvariante sind mehrere elektrische Maschinen vorgesehen, die jeweils ein Rad des Fahrzeugs antreiben, wobei diese Räder sich auf unterschiedlichen Achsen befinden können.

Bei dem in Figur 3 dargestellten Ausführungsbeispiel ist im Antriebsstrang 7 weder eine Kupplung 23 noch ein Getriebe 25 vorgesehen. Es ist jedoch ohne weiteres möglich, diese Einrichtungen im Antriebsstrang 7 vorzusehen.

Bei der in Figur 3 dargestellten Antriebsanordnung 5" kann anstelle mindestens einer Batterie als Stromspeicher 47 auch wenigstens eine Brennstoffzelle, vorzugsweise mehrere Brennstoffzellen, als Quelle des elektrischen Stroms vorgesehen sein.

Das sich mittels dem in Figur 3 dargestellten Ausführungsbeispiel realisierbare Verfahren zur Regelung der Fahrgeschwindigkeit des Fahrzeugs 3 ist analog zu den anhand der Figuren 1 und 2 beschrieben Verfahren. Wenn also das elektronische Steuergerät 33 feststellt, dass die über die Mittel 37 erfasste aktuelle Fahrgeschwindigkeit des Fahrzeugs 3 kleiner als die über die Mittel 39 vorgegebene Sollgeschwindigkeit ist, fordert das elektronische Steuergerät 33 von der elektrischen Maschine 17 ein positives Drehmoment, das zur Beschleunigung des Fahrzeugs 3 führt. Fordert das elektronische Steuergerät 33 aus dem Vergleich von Ist- und Sollgeschwindigkeit eine Verzögerung des Fahrzeugs 3, so wird über die Datenverbindung 35 ein negatives Drehmoment von der elektrischen Maschine 17 gefordert. Auch hier ist es vorteilhaft, wenn das Steuergerät 33 auch die Bremse 29 für das mindestens eine Rad 11 betätigt, um das Fahrzeug 3 noch stärker zu verzögern, falls das negative Drehmoment der elektrischen Maschine 17 allein nicht ausreicht. Schließlich ist es auch hier möglich, dass das elektronische Steuergerät 33 bei mindestens einem elektrischen Verbraucher 49 die Aufnahme von elektrischem Strom erhöht, falls der Stromspeicher 47 nicht den gesamten von der elektrischen Maschine 17 im generatorischen Betrieb erzeugten elektrischen Strom aufnehmen kann und die Verzögerung durch das Bremsmoment der elektrischen Maschine 17 nicht ausreichend ist.

## Patentansprüche

1. Verfahren zur Regelung der Fahrgeschwindigkeit eines mindestens eine elektrische Maschine (17) aufweisenden Fahrzeugs (3) in Abhängigkeit von zumindest dessen Istgeschwindigkeit und einer geforderten Sollgeschwindigkeit, wobei die Istgeschwindigkeit ermittelt wird und die Sollgeschwindigkeit einstellbar ist, wobei ein Vergleich der Ist- und der Sollgeschwindigkeit vorgenommen wird, wobei bei einer Istgeschwindigkeit größer als die Sollgeschwindigkeit eine Verzögerung des Fahrzeugs (3) gefordert und hierzu die elektrische Maschine (17) als Generator betrieben wird, und wobei bei einer Istgeschwindigkei kleiner als die Sollgeschwindigkeit die elektrische Maschine (17) als Motor betrieben wird, **dadurch gekennzeichnet, dass** kurzzeitige und/oder relativ kleine Schwankungen im erforderlichen Antriebsmoment, um das Fahrzeug (3) auf einer konstanten Geschwindigkeit zu halten, ausschließlich durch die elektrische Maschine (17) ausgeglichen werden, und dass nach einer bestimmten Zeitdauer (tₘₐₓ), in der Schwankungen des Abtriebsmoments ausschließlich durch die elektrische Maschine (17) ausgeglichen wurden, das Drehmoment der Brennkraftmaschine (15), vorzugsweise mittels eines Integrators, auf- beziehungsweise abgeregelt und der Anteil der elektrischen Maschine (17) am Gesamtantriebsmoment gegen Null zurückgeführt wird.

2. Verfahren nach Anspruch 1, **dadurch gekennzeichnet, dass** bei einer Istgeschwindigkeit größer als die Sollgeschwindigkeit zusätzlich mindestens eine, mit wenigstens einem Rad (11; 13; 11'; 13') des Fahrzeugs (3) zusammenwirkende Bremse (29) betätigt wird, um das Bremsmoment zu erhöhen.

3. Verfahren nach Anspruch 1 oder 2, **dadurch gekennzeichnet, dass** zum Zwecke des Verzögerns und des Beschleunigens des Fahrzeugs (3) das Drehmoment einer Brennkraftmaschine (15) des Fahrzeugs (3) entsprechend variiert wird.

4. Verfahren nach einem der vorhergehenden Ansprüche , **dadurch gekennzeichnet, dass** im motorischen Betrieb der elektrischen Maschine (17) diese von mindestens einem Stromspeicher (47) mit Strom zum Antrieb des Fahrzeugs (3) versorgt wird, und dass im generatorischen Betrieb der elektrischen Maschine (17) der erzeugte Strom von dem mindestens einen Stromspeicher (47) und/oder wenigstens einem elektrischen Verbraucher (49) aufgenommen wird.

5. Verfahren nach einem, der vorhergehenden Ansprüche, **dadurch gekennzeichnet, dass** eine zu hohe Fahrgeschwindigkeit des Fahrzeugs (3) durch rekuperatives Bremsen und eine zu geringe Fahrgeschwindigkeit durch Abgabe eines Antriebsmoments von der elektrischen Maschine (17) kompensiert wird.

6. Verfahren nach einem der vorhergehenden Ansprüchen, **dadurch gekennzeichnet, dass** sofern das von der elektrischen Maschine (17) bereitgestellte Drehmoment nicht ausreichend ist, um die geforderte Sollgeschwindigkeit beizubehalten, das Drehmoment der Brennkraftmaschine (15) oder die Getriebeübersetzung entsprechend angepasst wird.

## Claims

1. Method for controlling the speed of travel of a vehicle (3), which has at least one electrical machine (17), as a function of at least its actual speed and a required desired speed, with the actual speed being determined and it being possible to set the desired speed, with the actual speed and the desired speed being compared, with deceleration of the vehicle (3) being required, and to this end the electrical machine (17) being operated as a generator, when the actual speed is higher than the desired speed, and with the electrical machine (17) being operated as a motor when the actual speed is lower than the desired speed, **characterized in that** brief and/or relatively small fluctuations in the required drive torque, in order to keep the vehicle (3) at a constant speed, are compensated for solely by the electrical machine (17), and **in that**, after a specific period of time (tₘₐₓ), in which fluctuations in the output drive torque were compensated for solely by the electrical machine (17), the torque of the internal combustion engine (15) is increased or decreased, preferably by means of an integrator, and the influence of the electrical machine (17) on the total drive torque is reduced towards zero.

2. Method according to Claim 1, **characterized in that** at least one brake (29) which interacts with at least one wheel (11; 13; 11'; 13') of the vehicle (3) is additionally operated when the actual speed is higher than the desired speed, in order to increase the braking torque.

3. Method according to Claim 1 or 2, **characterized in that** the torque of an internal combustion engine (15) of the vehicle (3) is varied in a corresponding manner for the purpose of decelerating and accelerating the vehicle (3).

4. Method according to one of the preceding claims, **characterized in that** at least one electrical storage device (47) supplies power to the electrical machine (17) for the purpose of driving the vehicle (3) when the electrical machine (17) is in motor mode, and **in that** the power which is generated is stored by the at least one electrical storage device (47) and/or at least one electrical load (49) when the electrical machine (17) is in generator mode.

5. Method according to one of the preceding claims, **characterized in that** an excessively high speed of travel of the vehicle (3) is compensated for by recuperative braking, and an excessively low speed of travel is compensated for by the electrical machine (17) outputting a drive torque.

6. Method according to one of the preceding claims, **characterized in that** the torque of the internal combustion engine (15) or the transmission ratio is adapted appropriately if the torque provided by the electrical machine (17) is not adequate to maintain the required desired speed.

## Revendications

1. Procédé pour réguler la vitesse de roulage d'un véhicule (3) présentant au moins une machine électrique (17) en fonction d'au moins sa vitesse réelle et d'une vitesse de consigne demandée, selon lequel on détermine la vitesse réelle et on règle la vitesse de consigne, on compare ces deux vitesses, on demande un ralentissement du véhicule (3) si la vitesse réelle est supérieure à la vitesse de consigne et la machine électrique (17) est alors exploitée comme un générateur, alors que la machine électrique (17) fonctionne comme un moteur si la vitesse réelle est inférieure à la vitesse de consigne,
**caractérisé en ce que**
des oscillations courtes et/ou relativement faibles dans le couple d'entraînement requis sont exclusivement compensées par la machine électrique (17) afin de maintenir le véhicule (3) à une vitesse constante et après une durée donnée (tₘₐₓ), durant laquelle des variations du couple d'entraînement sont exclusivement compensées par la machine électrique (17), le couple de rotation du moteur à combustion interne (15) est régulé et/ou dérégulé de préférence à l'aide d'un intégrateur et la proportion de la machine électrique (17) sur le couple d'entraînement total est ramenée à une valeur proche de zéro.

2. Procédé selon la revendication 1,
**caractérisé en ce que**
lorsque la vitesse réelle est supérieure à la vitesse de consigne, on actionne au moins un frein (29) agissant avec au moins une roue (11; 13 ; 11'; 13') du véhicule (3) en complément afin d'augmenter le couple de freinage.

3. Procédé selon la revendication 1 ou 2,
**caractérisé en ce que**
le couple de rotation d'un moteur à combustion interne (15) du véhicule (3) est modifié en conséquence afin de ralentir et d'accélérer ce véhicule.

4. Procédé selon l'une quelconque des revendications précédentes,
**caractérisé en ce que**
lorsque la machine électrique (17) fonctionne comme un moteur, elle est alimentée en courant au moins par un accumulateur de courant (47) pour l'entraînement du véhicule (3), et le courant généré lorsque la machine électrique (17) fonctionne comme un générateur est absorbé par au moins un accumulateur de courant (47) et/ou par au moins un consommateur électrique (49).

5. Procédé selon l'une quelconque des revendications précédentes,
**caractérisé en ce qu'**
une vitesse de roulage trop élevée du véhicule (3) est compensée par un freinage de récupération, et une vitesse de roulage trop faible l'est par la libération d'un couple d'entraînement par la machine électrique (17).

6. Procédé selon l'une quelconque des revendications précédentes,
**caractérisé en ce que**
dans la mesure où le couple de rotation préparé par la machine électrique (17) n'est pas suffisant pour conserver la vitesse de consigne demandée, on adapte en conséquence le couple de rotation du moteur à combustion interne (15) ou le rapport de démultiplication.
